# EUROPÄISCHE PATENTSCHRIFT

(11) **EP 1 326 131 B1**
(45) Veröffentlichungstag und Bekanntmachung des Hinweises auf die Patenterteilung: **28.07.2004**
(21) Anmeldenummer: 02360008.3
(22) Anmeldetag: 08.01.2002
(51) Int. Cl.: G02F 1/225, H04B 10/18

(54) **Variable optische Verzögerungsleitung und Verwendung der variablen optischen Verzögerungsleitung**
Variable optical delay line and method of using the variable optical delay line
Ligne optique à retard variable et procédé permettant l'utilisation de la ligne optique à retard variable

(43) Veröffentlichungstag der Anmeldung: 09.07.2003
(73) Patentinhaber: ALCATEL, 75008 Paris (FR)
(72) Erfinder: Bülow, Henning, Dr., 70806 Kornwestheim (DE)
(74) Vertreter: Rausch, Gabriele, Dr.

(56) Entgegenhaltungen:
- EP-A- 0 909 045
- US-B1- 6 185 345
- US-B1- 6 334 004
- TAKIGUCHI K ET AL: "Planar lightwave circuit dispersion equaliser module with polarisation insensitive properties" ELECTRONICS LETTERS, IEE STEVENAGE, GB, Bd. 31, Nr. 1, 5. Januar 1995 (1995-01-05), Seiten 57-58, XP006002298 ISSN: 0013-5194

## Beschreibung

Die Erfindung betrifft eine variable optische Verzögerungsleitung und die Verwendung einer solchen variablen optischen Verzögerungsleitung.

Variable optische Verzögerungsleitungen werden zur Kompensation der Polarisationsdispersion (PMD, polarization mode dispersion) und zum Signalabgleich in Multiplexern und Routem, insbesondere bei hohen Datenraten benötigt.

Für die Polarisationskompensation sind variable mechanische Verzögerungsleitungen bekannt, bei denen über an Motoren befestigten Spiegeln der Strahlweg variiert werden kann.

Diese Lösung ist sehr langsam, sehr teuer und starke Veränderungen in der Verzögerung begrenzen die Polarisationskompensation in höheren Ordnungen.

Weiterhin sind für die Polarisationskompensation Kaskaden aus doppelbrechenden Geräten und Polarisationssteuerungen (PC, polarization controller) bekannt.
Aus der EP 0909 045 ist eine variable Verzögerungsleitung bekannt, die auch in integrierter Form realisiert werden kann und desen Merkmale die Präambel von Anspruch 1 bilden. Die variable Verzögerungsleitung besteht aus einer Kombination von asymmetrischen Mach Zehnder Interferometern, wobei Phasenschieber die Laufzeiten zwischen den Armen der Interferometer beeinflussen. Die verschiedenen Einzelverzögerungen werden mit einzelnen Steuerungen der Phasenschieber eingestellt.

Solche Kaskaden weisen viele Parameter und Freiheitsgrade auf, welche eine Einstellung schwierig und aufwändig machen. Weiterhin besitzen sie eine verringerte Leistung.
Es ist daher eine Aufgabe der Erfindung, eine neue variable optische Verzögerungsleitung und eine Verwendung der neuen variablen optischen Verzögerungsleitung bereitzustellen. Diese Aufgabe wird gelöst durch eine variable optische Verzögerungsleitung gemäß Anspruch 1.

Mit der erfindungsgemäßen variablen optischen Verzögerungsleitung wird eine stufenlose Verzögerung ermöglicht. Während der Einstellung der Verzögerung mit den Phasenschiebergliedern wird das Signal nicht zerstört, was für viele Anwendungen vorteilhaft ist. Durch eine optisch-elektrisch rückgekoppelte Ansteuerung der Phasenregler werden auch eventuelle Herstellungsungenauigkeiten ausgeglichen. Die Rückkopplung der Phasenregler kann auch für niedrige Geschwindigkeiten ausgelegt werden, was Kosten spart.

Die Aufgabe wird weiterhin gelöst durch ein Verfahren gemäß Anspruch 4.

Das Verfahren hat den Vorteil, dass unter Änderung nur eines Parameters die Einstellung der gewünschten Verzögerung erfolgen kann.

Vorteilhafte Anwendungen sind in den Ansprüchen 5 bis 8 angegeben.

Weitere vorteilhafte Ausführungsformen der Erfindung ergeben sich aus der nachfolgenden Beschreibung und den Zeichnungen. Es zeigen
- Fig. 1: eine variable optische Verzögerungsleitung nach der Erfindung,
- Fig. 2: einen Polarisationskompensator, und
- Fig. 3: eine weitere Ausführungsform einer variablen optischen Verzögerungsleitung.

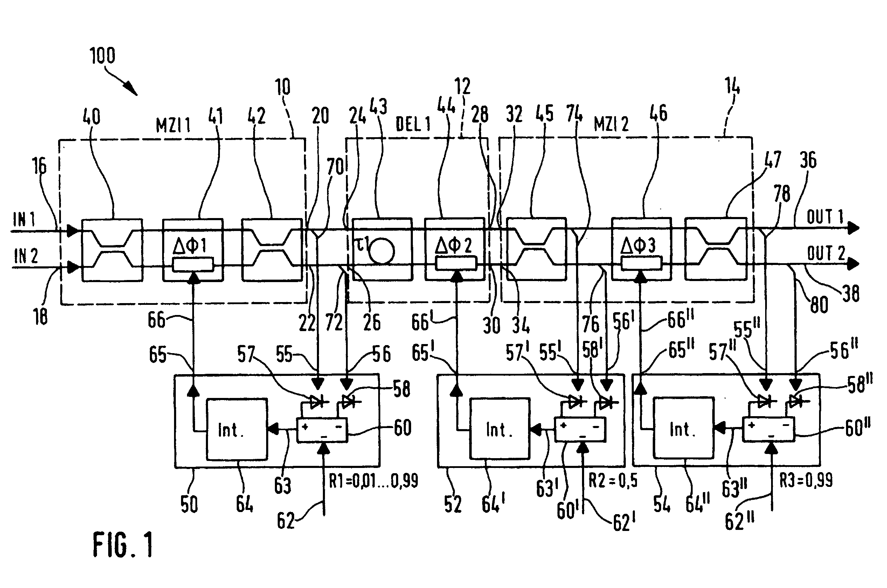

**Fig. 1** zeigt eine variable optische Verzögerungsleitung 100 mit einem ersten Mach-Zehnder-Interferometer 10 (MZI1), einer ersten Verzögerungsstufe 12 (DEL1) und einem zweiten Mach-Zehnder-Interferometer 14 (MZI2).

Das erste Mach-Zehnder-Interferometer 10 weist zwei optische Eingänge 16 (IN1) und 18 (IN2) und zwei optische Ausgänge 20 und 22 auf.

Die Verzögerungsstufe 12 weist zwei optische Eingänge 24, 26 und zwei optische Ausgänge 28, 30 auf, wobei die optischen Eingänge 24, 26 mit den optischen Ausgängen 20, 22 des ersten Mach-Zehnder-Interferometers 10 verbunden sind.

Das zweite Mach-Zehnder-Interferometer 14 weist zwei optische Eingänge 32, 34 und zwei optische Ausgänge 36 (OUT 1), 38 (OUT 2) auf, wobei die optischen Eingänge 32, 34 mit den optischen Ausgängen 28, 30 der ersten Verzögerungsstufe 12 verbunden sind.

Das erste Mach-Zehnder-Interferometer 10 weist zwei Strahlteiler 40, 42 und ein zwischen diesen liegendes erstes Phasenschieberglied 41 (ΔPHI1) auf, die erste Verzögerungsstufe 12 weist ein erstes Verzögerungsglied 43 mit einer festen Verzögerung tau1 und ein zweites Phasenschieberglied 44 (ΔPHI2) auf, und das zweite Mach-Zehnder-Interferometer 14 weist zwei Strahlteiler 45, 47 und ein zwischen diesen liegendes drittes Phasenschieberglied 46 (ΔPHI3) auf. Die Strahlteiler 40, 42, 45 und 47 aus den Mach-Zehnder-Interferometern teilen üblicherweise im Verhältnis 50% zu 50%.

Das erste Mach-Zehnder-Interferometer 10, die erste Verzögerungsstufe 12 und das zweite Mach-Zehnder-Interferometer 14 sind jeweils mit einem Phasenregler 50, 52 bzw. 54 versehen.

Der Phasenregler 50 weist zwei optische Eingänge 55, 56 auf, welche jeweils mit einer Fotodiode 57, 58 versehen sind. Ein Vergleichselement 60 ist eingangsseitig einerseits mit den Fotodioden 57, 58 verbunden und andererseits mit einer Leitung 62, über die ein Sollwert R1 zugeführt wird. Der Ausgang 63 des Vergleichselements 60 ist mit einem Integrator 64 (Int.) verbunden, der über den Ausgang 65 eine Stellgröße ausgibt. Die Phasenregler arbeiten nach einem optisch-elektrischen Prinzip.

Die Phasenregler 52 und 54 sind gleichartig aufgebaut, und die entsprechenden Bezugszeichen sind ein- bzw. zweigestrichen, z.B. 65' bzw. 65".

Der Strahlteiler 42 weist an dem Ausgang 20 einen oberen Auskoppler (tap) 70 und an dem Ausgang 22 einen unteren Auskoppler 72 auf. Ein Ausgang des oberen Auskopplers 70 ist mit dem Eingang 55 und ein Ausgang des unteren Auskopplers 72 mit dem Eingang 56 des Phasenreglers 50 verbunden, und der Ausgang 65 des Phasenreglers 50 ist über eine Leitung 66 mit dem ersten Phasenschieberglied 41 verbunden. Der Eingang 55 wirkt auf die Fotodiode 57, der Eingang 56 auf die Fotodiode 58.

Die Ausgänge der auf die Phasenschieberglieder 44 bzw. 46 folgenden Strahlteiler 45 bzw. 47 weisen ebenfalls jeweils obere Auskoppler 74 bzw. 78 sowie untere Auskoppler 76 bzw. 80 auf, welche mit den Eingängen der Phasenregler 52 bzw. 54 verbunden sind, und die Phasenregler 52 bzw. 54 sind ausgangsseitig über die Leitungen 66' bzw. 66" mit den Phasenschiebergliedern 44 bzw. 46 verbunden.

Dem Phasenregler 52 wird über eine Leitung 62' ein Sollwert R2 zugeführt, und dem Phasenregler 54 wird über eine Leitung 62" ein Sollwert R3 zugeführt.

### Arbeitsweise

Die Leitung mit dem zu verzögernden optischen Signal wird mit dem Eingang 16 (IN1) der variablen optischen Verzögerungsleitung 100 verbunden, und das Ausgangssignal wird an dem Ausgang 36 (OUT1) entnommen.

Das erste, das zweite und das dritte Phasenschieberglied (41, 44, 46) werden nun derart angesteuert, dass die variable optische Verzögerungsleitung (100) eine vorgegebene Verzögerung tau erzeugt. Hierzu werden die Phasenschieberglieder 41, 44 bzw. 46 über die Phasenregler 50, 52 bzw. 54 derart beeinflusst bzw. abgestimmt, dass die relative optische Leistung P_rel_up = P_up / (P_up + P_down) des oberen Auskopplers 70, 74 bzw. 78, also das Verhältnis der Leistung P_up des oberen Auskopplers 70, 74 bzw. 78 zu der Summe P_up + P_down der Leistungen des oberen Auskopplers 70, 74, 78 und des unteren Auskopplers 72, 76 bzw. 80, jeweils dem Sollwert R1, R2 bzw. R3 entspricht.

Der Sollwert R1, R2 bzw. R3 kann jeweils auf einen Wert zwischen 0 und 1 eingestellt werden.

Bei dem ersten Phasenregler 50 wird der Sollwert R1 zwischen 0 und 1 eingestellt. Der Sollwert R2 für den zweiten Phasenregler 52 wird fest auf etwa R2 = 0,5 und der Sollwert R3 für den dritten Phasenregler 54 fest auf etwa R3 = 0,99 eingestellt.

Das Verzögerungsglied 43 wirkt nur auf das zwischen dem Eingang 26 und dem Ausgang 30 durchlaufende Signal. Daher kann über den Sollwert R1 eingestellt werden, welcher Anteil des am Eingang 16 (IN1) zugeführten Signals um die Zeit tau1 verzögert wird, und am Ausgang 36 (OUT1) hat das Signal eine variable Verzögerung tau, welche in Abhängigkeit des Sollwerts R1 stufenlos zwischen 0 und tau1 liegt.

Die Mach-Zehnder-Interferometer 10, 14 können allgemeiner als Phasenschieberstufen bezeichnet werden, und die gesamte variable optische Verzögerungsleitung 100 bildet ihrerseits eine Mach-Zehnder-Struktur.

Die erfindungsgemäße variable optische Verzögerungsleitung 100 stellt unter Verwendung der Phasenregler 50, 52 und 54 eine sich selbst stabilisierende optische Anordnung dar, und Toleranzen bei der Herstellung und im Betrieb können so gut ausgeglichen werden. Die variable optische Verzögerungsleitung 100 kann auch integriert ausgeführt werden.

Die Phasenregler 50, 52 und 54 können dabei für niedrige Geschwindigkeiten ausgelegt werden, da sie nur die mittlere Leistung des von den oberen Auskopplern 70, 74 bzw. 78 und von den unteren Auskopplem 72, 76 bzw. 80 gelieferten Signals verarbeiten müssen. Dies reduziert die Kosten.

Ebenfalls vorteilhaft ist, dass die Abstimmung der Verzögerungszeit tau über ein einziges Stellglied zur Beeinflussung des Sollwerts R1 erfolgen kann (one-knob tuning).

Ein weiterer Vorteil besteht darin, dass das Signal während der Abstimmung mittels des Sollwerts R1 nicht unterbrochen oder zerstört wird, so dass eine kontinuierliche und stufenlose Abstimmung vorgenommen werden kann. Dies ist besonders bei Multiplexern und Routern mit hohen Übertragungsraten ein großer Vorteil.

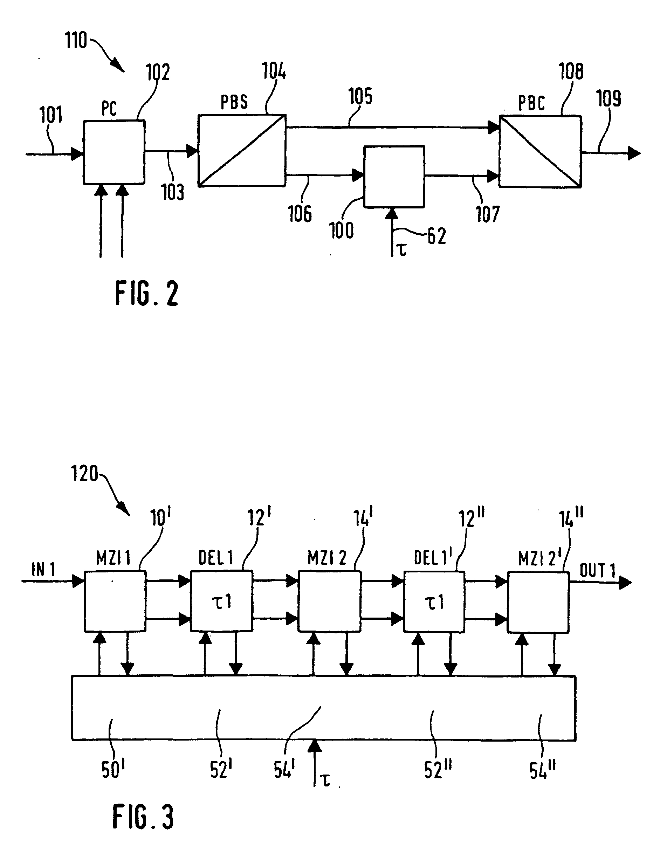

**Fig. 2** zeigt die Verwendung der variablen optischen Verzögerungsleitung 100 in einem Polarisationskompensator 110 zur Kompensation der in Glasfasern bei hohen Übertragungsraten als störender Faktor auftretenden Polarisationsdispersion.

Eine Glasfaser 101 ist mit einer Polarisationssteuerung 102 (PC) verbunden. Ein erster Polarisationsstrahlteiler 104 (PBS, polarization beam splitter) ist eingangsseitig über eine Leitung 103 mit der Polarisationssteuerung 102 verbunden.

Der Polarisationsstrahlteiler 104 ist über eine Leitung 105 direkt mit einem als Strahlvereiniger wirkenden Polarisationsstrahlteiler 108 (PBC, polarization beam combiner) verbunden, und über eine Leitung 106 mit einer erfindungsgemäßen variablen optischen Verzögerungsleitung 100. Der Ausgang der variablen optischen Verzögerungsleitung 100 ist über eine Leitung 107 mit dem Polarisationsstrahlteiler 108 verbunden.

Das polarisationskompensierte Signal wird über eine optische Leitung 109 ausgegeben.

### Arbeitsweise

Das Lichtsignal in Lichtfasern hat Polarisationsrichtungen entlang zweier Polarisationshauptachsen, wobei die Ausbreitungsgeschwindigkeit des Lichtsignals bei einer Polarisationsrichtung längs der einen Hauptachse größer als bei einer Polarisationsrichtung längs der anderen Hauptachse ist. Dadurch wird das Lichtsignal aufgeweitet. Die Aufweitung entsteht durch die zeitliche Verschiebung der beiden Signale mit den unterschiedlichen Polarisationsrichtungen gegeneinander und wird über die differenzielle Gruppenverzögerung (DGD, differential group delay) gemessen. Die differenzielle Gruppenverzögerung wird üblicherweise in µs oder bei hohen Übertragungsraten in ps angegeben. Durch die Polarisationssteuerung 102 wird die Polarisation des über die Leitung 101 zugeführten Lichtsignals derart eingestellt, dass die Polarisationsrichtungen längs der beiden Polarisationshauptachsen im Polarisationsstrahlteiler 104 so getrennt werden, dass die Polarisationsrichtung längs der ersten Polarisationshauptachse mit der langsameren Ausbreitungsgeschwindigkeit über die obere Leitung 105 direkt dem Polarisationsstrahlteiler 108 zugeführt wird, während die andere Polarisationsrichtung entlang der zweiten Polarisationshauptachse mit der schnelleren Ausbreitungsgeschwindigkeit durch die variable optische Verzögerungsleitung 100 durchgeleitet wird. Über die Leitung 62 kann nun der Sollwert R1 derart eingestellt werden, dass ein Abgleich der beiden über die Leitungen 105 und 106 verlaufenden Teilsignale zu DGD = 0 ps erfolgt.

Die abgeglichenen Teilsignale werden in dem Polarisationsstrahlteiler 108 wieder vereinigt und über die Leitung 109 weitergeleitet.

Eine Hintereinanderkopplung mehrerer Polarisationskompensatoren 110 ermöglicht eine Polarisationskompensation höherer Ordnung.

Ein solcher Polarisationskompensator 110 kann auch komplett integriert ausgeführt werden.

Durch die reduzierte Anzahl von Parametern und die Vermeidung von Änderungen der Phasenverzögerung ist eine schnelle und insbesondere für Polarisationskompensationen höherer Ordnung wirksame Polarisationskompensation gegeben.

Die variable optische Verzögerungsleitung kann bevorzugt auch für optische Empfänger, optische Multiplexer und optische Router verwendet werden. Hierbei ist insbesondere die stufenlose Einstellung ohne Zerstörung des Signals vorteilhaft.

**Fig.** 3 zeigt eine variable optische Verzögerungslinie 120, welche wie die variable Verzögerungslinie 100 ein erstes Mach-Zehnder-Interferometer 10' (MZI1), eine Verzögerungsstufe 12' (DEL1) und ein zweites Mach-Zehnder-Interferometer 14' (MZI2) aufweist.

Hinter dem zweiten Mach-Zehnder-Interferometer 14' ist zusätzlich eine zweite Verzögerungsstufe 12" (DEL1') und ein drittes Mach-Zehnder-Interferometer 14" (MZI2') angeordnet. Den dazugehörenden Phasenschiebern sind jeweils Phasenregler 50', 52', 54', 52", 54" zugeordnet.

### Arbeitsweise

Die Verzögerungsstufen 12' und 12" haben in diesem Ausführungsbeispiel jeweils eine feste Verzögerung von tau1. Da die Verzögerung tau1 einer Verzögerungsstufe etwa ein Drittel der Bitdauer des Signals nicht überschreiten sollte, wird eine größere maximale Gesamtverzögerung durch Kaskadierung erzielt. Durch die zusätzliche Anordnung mit der zweiten Verzögerungsstufe 12" und der dritten Phasenschieberstufe 14" wird erreicht, dass die Gesamtverzögerung tau mit der Anordnung 120 variabel zwischen 0 und 2 * tau1 gewählt werden kann. Man erreicht also eine Verdopplung der maximalen Gesamtverzögerung.

Durch Hinzufügen weiterer solcher Anordnungen mit jeweils einer Verzögerungsstufe mit fester Verzögerung und einer Phasenschieberstufe kann nach erfolgter Phasenabstimmung die maximale Gesamtverzögerung tau weiter erhöht werden. Die maximale Gesamtverzögerung tau ergibt sich aus der Summe aller festen Verzögerungszeiten, und sie kann über ein einziges Stellglied eingestellt werden.

## Patentansprüche

1. Variable optische Verzögerungsleitung (100) zur Signalverzögerung
a) mit mindestens einem ersten Eingang (16), einem ersten Ausgang (36) und einem zweiten Ausgang (38),
b) mit einer ersten Phasenschieberstufe (10), welche mit dem ersten Eingang (16) verbunden ist und ein erstes Phasenschieberglied (41) aufweist,
c) mit einer ersten Verzögerungsstufe (12), welche mit der ersten Phasenschieberstufe (10) verbunden ist und ein zweites Phasenschieberglied (44) sowie eine feste Verzögerung tau1 (43) aufweist,
d) und mit einer zweiten Phasenschieberstufe (14), welche mit der ersten Verzögerungsstufe (12) sowie dem ersten und zweiten Ausgang (36, 38) verbunden ist und ein drittes Phasenschieberglied (46) aufweist,
e) wobei die erste Phasenschieberstufe (10), die erste Verzögerungsstufe (12) und die zweite Phasenschieberstufe (14) jeweils in Art eines Mach-Zehnder-Interferometers mit Strahlteilem und erstem und zweitem Arm aufgebaut sind und sich das erste, zweite und dritte Phasenschieberglied (41, 44 bzw. 46) im zweiten Arm des jeweiligen Mach-Zehnder-Interferometers befinden,
f) wobei das Verhältnis der optischen Leistung im ersten Arm zu der Summe der optischen Leistungen im ersten und zweiten Arm in der ersten Verzögerungsstufe einem Sollwert R1 entspricht und in der zweiten Phasenschieberstufe einem Sollwert R2 entspricht sowie das Verhältnis der optischen Leistung im ersten Ausgang zu der Summe der optischen Leistungen im ersten und zweiten Ausgang einem Sollwert R3 entspricht,
g) wobei das erste, zweite und dritte Phasenschieberglied (41, 44 bzw. 46) jeweils über einen ersten, zweiten bzw. dritten Phasenregler (50, 52 bzw. 54) abstimmbar sind,
**dadurch gekennzeichnet,**
**dass** das erste, zweite und dritte Phasenschieberglied (41, 44 bzw. 46) so abgestimmt sind, dass R1 durch den ersten Phasenregler (50) zwischen 0 und 1, R2 durch den zweiten Phasenregler (52) auf etwa 0,5 und R3 durch den dritten Phasenregler (54) auf etwa 0,99 eingestellt sind, wodurch die Signalverzögerung abhängig von R1 stufenlos zwischen 0 und tau1 einstellbar ist.

2. Variable optische Verzögerungsleitung (100) nach Anspruch 1, wobei die Phasenregler (50, 52, 54) opto-elektrisch arbeiten.

3. Variable optische Verzögerungsleitung (100) nach einem der vorhergehenden Ansprüche, wobei auf die zweite Phasenschieberstufe (14') mindestens eine weitere Anordnung mit einer zweiten Verzögerungsstufe (12") und einer dritten Phasenschieberstufe (14") folgt.

4. Verfahren zur Signalverzögerung mit einer variablen optischen Verzögerungsleitung (100) nach einem der vorhergehenden Ansprüche mit den folgenden Schritten:
A) der Sollwert R1 des ersten Phasenschieberglieds wird derart eingestellt, dass die Signalverzögerung zwischen 0 und tau1 liegt;
B) die weiteren Phasenschieberglieder werden mit festgestellten Werten R2 und R3 betrieben.

5. Optischer Empfänger, welcher zur Signalverzögerung eine optische variable Verzögerungsleitung nach einem der Ansprüche 1 bis 4 verwendet.

6. Polarisationsdispersions-Kompensator, welcher zur Signalverzögerung eine optische variable Verzögerungsleitung nach einem der Ansprüche 1 bis 4 verwendet.

7. Optischer Multiplexer, welcher zur Signalverzögerung eine optische variable Verzögerungsleitung nach einem der Ansprüche 1 bis 4 verwendet.

8. Optischer Router, welcher zur Signalverzögerung eine optische variable Verzögerungsleitung nach einem der Ansprüche 1 bis 4 verwendet.

## Claims

1. Variable optical delay line (100) for signal delay,
a) having at least a first input (16), a first output (36) and a second output (38),
b) having a first phase shifter stage (10) that is connected to the first input (16) and has a first phase shifter member (41),
c) having a first delay stage (12) that is connected to the first phase shifter stage (10) and has a second phase-shifter element (44) and also has a fixed delay tau1 (43),
d) and having a second phase shifter stage (14) that is connected to the first delay stage (12) and also to the first and second outputs (36,38) and that has a third phase-shifter element (46),
e) wherein the first phase shifter stage (10), the first delay stage (12) and the second phase shifter stage (14) are each constructed in the fashion of a Mach-Zehnder interferometer having beam splitters and first and second arms and the first, second and third phase-shifter elements (41, 44 and 46, respectively) are situated in the second arm of the respective Mach-Zehnder interferometer,
f) wherein the ratio of the optical power in the first arm to the sum of the optical powers in the first and second arms in the first delay stage is equal to a setpoint value R1 and is equal to a setpoint value R2 in the second phase shifter stage, and also the ratio of the optical power in the first output to the sum of the optical powers in the first and second outputs is equal to a setpoint value R3,
g) wherein the first, second and third phase-shifter elements (41, 44, and 46, respectively) are each tunable by means of a first, second and third phase controller, respectively (50, 52 and 54, respectively),
**characterized**
**in that** the first, second and third phase-shifter elements (41, 44 and 46, respectively) are tuned in such a way that R1 is set between 0 and 1 by the first phase controller (50), R2 is set to about 0.5 by the second phase controller (52) and R3 is set to about 0.99 by the third phase controller (54), as a result of which the signal delay can be set steplessly between 0 and tau1 independently of R1.

2. Variable optical delay line (100) according to Claim 1, wherein the phase controllers (50, 52, 54) operate optoelectrically.

3. Variable optical delay line (100) according to either of the preceding claims, wherein the second phase shifter stage (14') is followed by at least one further arrangement comprising a second delay stage (12") and a third phase shifter stage (14").

4. Signal delay method employing a variable optical delay line (100) according to any one of the preceding claims comprising the following steps:
A) the setpoint value R1 of the first phase-shifter element is set in such a way that the signal delay lies between 0 and tau1;
B) the further phase-shifter elements are operated with fixed values R2 and R3.

5. Optical receiver that uses an optical variable delay line according to any one of Claims 1 to 4 for signal delay.

6. Polarization dispersion compensator that uses an optical variable delay line according to any one of Claims 1 to 4 for signal delay.

7. Optical multiplexer that uses an optical variable delay line according to any one of Claims 1 to 4 for signal delay.

8. Optical router that uses an optical variable delay line according to any one of Claims 1 to 4 for signal delay.

## Revendications

1. Ligne optique à retard variable (100) pour retarder un signal, comprenant
a) au moins une première entrée (16), une première sortie (36) et une deuxième sortie (38),
b) un premier étage de déphaseur (10) qui est relié à la première entrée (16) et présente un premier composant de déphaseur (41),
c) un premier étage de retard (12) qui est relié au premier étage de déphaseur (10) et présente un deuxième composant de déphaseur (44) ainsi qu'un retard définitif tau1 (43),
d) et un deuxième étage de déphaseur (14) qui est relié au premier étage de retard (12) ainsi qu'à la première et deuxième sortie (36, 38) et présente un troisième composant de déphaseur (46),
e) dans laquelle le premier étage de déphaseur (10), le premier étage de retard (12) et le deuxième étage de déphaseur (14) sont respectivement organisés à la manière d'un interféromètre de Mach-Zehnder avec des séparateurs de faisceaux et un premier et deuxième bras, et le premier, deuxième et troisième composant de déphaseur (41, 44 ou 46) se trouvent dans le deuxième bras de l'interféromètre de Mach-Zehnder respectif,
f) dans laquelle le rapport entre la puissance optique dans le premier bras et la somme des puissances optiques dans le premier et deuxième bras dans le premier étage de retard correspond à une valeur de consigne R1 et dans le deuxième étage de déphaseur correspond à une valeur de consigne R2, tout comme le rapport entre la puissance optique dans la première sortie et la somme des puissances optiques dans la première et deuxième sortie correspond à une valeur de consigne R3,
g) dans laquelle le premier, deuxième et troisième composant de déphaseur (41, 44 ou 46) peuvent respectivement être syntonisés par l'intermédiaire d'un premier, deuxième ou troisième régulateur de phase (50, 52 ou 54),
**caractérisée en ce que**
le premier, deuxième et troisième composant de déphaseur (41, 44 ou 46) sont syntonisés de telle sorte que R1 est réglé entre 0 et 1 par le premier régulateur de phase (50), R2 est réglé par exemple sur 0,5 par le deuxième régulateur de phase (52), et R3 est réglé par exemple sur 0,99 par le troisième régulateur de phase (54), de manière à ce que le retard de signal soit réglable progressivement entre 0 et tau1 en fonction de R1.

2. Ligne optique à retard variable (100) selon la revendication 1, dans laquelle les régulateurs de phase (50, 52, 54) fonctionnent de façon optoélectrique.

3. Ligne optique à retard variable (100) selon l'une quelconque des revendications précédentes, dans laquelle le deuxième étage de déphaseur (14') est suivi d'au moins un autre agencement avec un deuxième étage de retard (12") et un troisième étage de déphaseur (14").

4. Procédé de retard de signal avec une ligne optique à retard variable (100) selon l'une quelconque des revendications précédentes, comprenant les étapes suivantes consistant à :
A) régler la valeur de consigne R1 du premier composant de déphaseur de telle sorte que le retard de signal se situe entre 0 et tau1 ;
B) exploiter les autres composants de déphaseur avec les valeurs définies R2 et R3.

5. Récepteur optique utilisant pour le retard de signal une ligne optique à retard variable selon l'une quelconque des revendications 1 à 4.

6. Compensateur de dispersion de mode de polarisation utilisant pour le retard de signal une ligne optique à retard variable selon l'une quelconque des revendications 1 à 4.

7. Multiplexeur optique utilisant pour le retard de signal une ligne optique à retard variable selon l'une quelconque des revendications 1 à 4.

8. Routeur optique utilisant pour le retard de signal une ligne optique à retard variable selon l'une quelconque des revendications 1 à 4.
